# FASCICULE DE BREVET EUROPEEN

(11) **EP 0 575 344 B1**
(45) Date de publication et mention de la délivrance du brevet: **31.08.1994**
(21) Numéro de dépôt: 92903203.5
(22) Date de dépôt: 20.12.1991
(51) Int. Cl.: B64C 31/02

(54) **ENGIN VOLANT DU TYPE ULTRA-LEGER MOTORISE**
FLIEGENDES FAHRZEUG, WIE MOTORISIERTES ULTRALEICHTES FLUGZEUG
MICROLI FLYING DEVICE

(30) Priorité: 14.01.1991 FR 9100337
(43) Date de publication de la demande: 29.12.1993
(73) Titulaire: SOCIETE FRANCAISE DE CONSTRUCTION AERONAUTIQUE SOFCA, F-91350 Grigny (FR)
(72) Inventeur: ALALUQUETAS, Jacques, F-94260 Fresnes (FR)
(74) Mandataire: Hasenrader, Hubert
(86) Numéro de dépôt international: FR9101042
(87) Numéro de publication internationale: WO9212050

(56) Documents cités:
- EP-A- 0 130 925
- DE-B- 1 182 962
- US-A- 3 443 779
- US-A- 4 204 656

## Description

La présente invention concerne un engin volant du type ultra-léger motorisé, comportant une nacelle avec poste de pilotage, une voilure de sustentation, des moyens de propulsion destinés à souffler de l'air vers l'arrière dudit engin et des moyens de pilotage.

Ce type d'engin volant autonome est connu depuis plusieurs années. En général la voilure de sustentation se présente souvent sous la forme d'une aile dite "delta", et elle est constituée d'une armature rigide recouverte d'une toile. La voilure est le plus souvent démontable, de manière à permettre un transport aisé de l'engin sous un faible volume.

On connaît également, dans les milieux sportifs, l'utilisation de parachutes de type "aile" qui ont l'avantage d'obéir aux mêmes principes aérodynamiques qu'une aile de planeur. Toutefois, l'utilisation de ce type de parachute à partir du sol nécessite un départ à partir d'un point de lancement situé en altitude et un déploiement préalable du parachute que le parachutiste, qui en est équipé, obtient en courant au point ce lancement avant de s'élancer dans le vide.

On connaît également l'utilisation d'un parachute de type "aile" en tant que parachute ascensionnel. Dans ce cas, le parachutiste est tracté par des moyens appropriés qui se déplacent sur le sol.

L'état de la technique le plus proche de la présente invention est illustré par la demande de brevet européen EP-A-0 130 925. Ce document dévoile en effet un engin volant de type ultra-léger motorisé, comportant une nacelle avec poste de pilotage une voilure de sustentation, des moyens de propulsion destinés à souffler de l'air vers l'arrière dudit engin et des moyens de pilotage, la voilure de sustentation étant constituée d'un parachute de type "aile", aux suspentes duquel ladite nacelle est accrochée. Le glonfement de la voilure et son positionnement au-dessus de la nacelle résultant de la vitesse acquise par l'engin dans la phase de décollage, ce qui nécessite une longueur de décollage relativement grande.

US-A-3 443 779 concerne une aile flexible munie de raidisseurs gonflables et d'une manche à air susceptible de capter une partie de l'air propulsé vers l'arrière par les moyens de propulsion de manière à gonfler les raidisseurs. Ce document ne fournit aucun enseignement sur les moyens pour déployer et positionner l'aile au-dessus d'une nacelle lors de la phase de décollage.

Le but de l'invention est de réaliser un engin volant du type mentionné ci-dessus qui utilise une voilure souple du type parachute et qui puisse décoller sur une très courte distance.

L'invention atteint son but par le fait que ledit engin volant comporte, de plus, des moyens pour dévier, à la demande, au moins une partie de l'air soufflé par lesdits moyens de propulsion de manière à permettre, dans la phase précédant le décollage dudit engin, le gonflement de ladite voilure, son déploiement et son positionnement au-dessus de ladite nacelle, lesdits moyens pour dévier au moins une partie de l'air soufflé par les moyens de propulsion étant portés par ladite nacelle.

Grâce à cette conception de l'engin, celui-ci peut décoller par ses propres moyens en roulant sur une faible longeur, après déploiement de la voilure.

Il est à noter que, lorsque l'engin est à l'arrêt sur le sol, le volume d'air nécessaire pour déployer la voilure est relativement faible, et ce volume d'air est fourni par les moyens de propulsion tournant au ralenti.

L'orientation du flux d'air dans la direction verticale de bas en haut sur la voilure permet un vol presque stationnaire.

Lorsque le parachute est gonflé et positionné au-dessus de la nacelle, le flux d'air est de nouveau dirigé vers l'arrière de l'engin assurant alors le déplacement horizontal de l'engin sur le sol et son décollage, le parachute fonctionnant maintenant comme un parachute ascensionnel.

Les moyens de propulsion de l'engin comportent au moins une hélice de propulsion actionnée par un moteur.

De préférence, les moyens pour dévier au moins une partie de l'air soufflé par lesdits moyens de propulsion comportent un arbre horizontal pivotable disposé transversalement sur ladite nacelle et dont le pivotement est commandé, dudit poste de pilotage, par des moyens de commande, et l'une au moins des hélices des moyens de propulsion est portée par ledit arbre.

Avantageusement, une extrémité au moins dudit arbre est munie d'un plan mobile disposé à l'extérieur de la nacelle et une hélice est montée sur ledit plan mobile.

Grâce à cette structure, au moins une hélice de propulsion de l'engin est orientable à la demande du pilote. Ceci lui permet de diriger le souffle d'air produit par cette hélice vers la voilure, lors de la phase préparatoire au décollage, pour gonfler celle-ci et la positionner au-dessus de la nacelle.

Pour permettre une orientation correcte du souffle d'air, l'arbre peut pivoter par rapport à la nacelle d'un quart de tour environ.

Avantageusement, l'arbre est solidaire de deux plans mobiles disposés de part et d'autre de la nacelle, et les moyens de propulsion comportent au moins deux hélices montées respectivement sur lesdits plans mobiles.

D'autres avantages et caractéristiques de l'invention ressortiront à la lecture de la description suivante faite à titre d'exemple et en référence au dessin annexé dans lequel :
la figure 1 montre l'engin volant de l'invention en phase de vol
les figures 2 à 4 montrent différentes vues successives de l'engin volant de l'invention au cours de la phase préparatoire au décollage ;

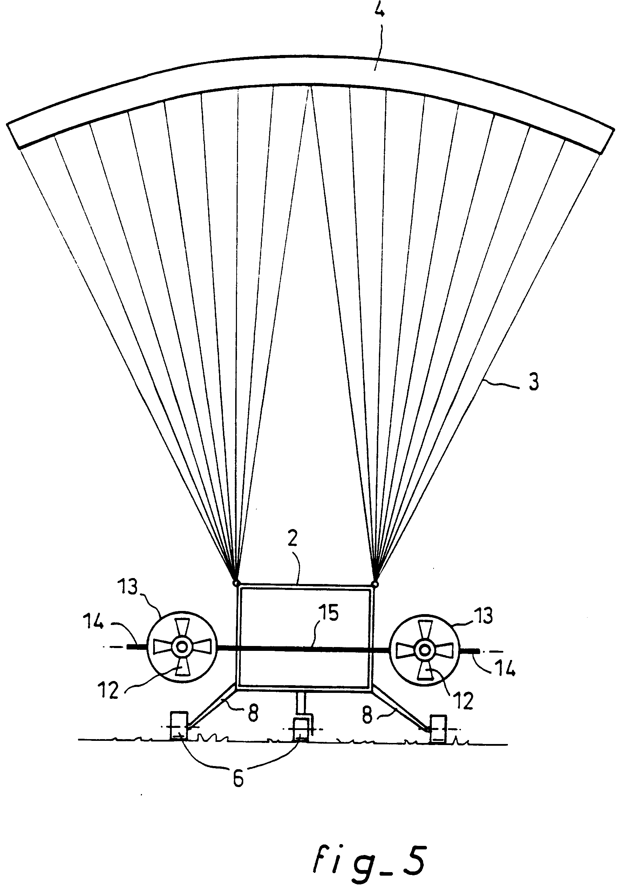

la figure 5 représente une vue arrière de l'engin en phase de vol ; et,
la figure 6 montre l'engin volant de l'invention dans une phase de vol presque stationnaire.

Le dessin montre on engin volant 1 conforme à l'invention.

Cet engin 1 comporte essentiellement une nacelle 2 fixée aux suspentes 3 d'un parachute 4, du type "aile" qui constitue la voilure de sustentation de l'engin 1.

La voilure est fixée à la nacelle 2 par quatre points d'ancrage répartis d'une façon quadrangulaire de manière à annuler l'effet balançoire.

La nacelle 2 peut reposer sur le sol 5 au moyen de roues 6 prévues aux extrémités inférieures ce jambes de support 9 s'étendant sous la nacelle 2. Elle est réalisée dans des matériaux légers, du plastique par exemple, et elle comporte un poste de pilotage 10 pouvant recevoir le pilote et éventuellement ces passagers.

L'engin comporte en plus des moyens de pilotage et des moyens de propulsion 11 destinés à souffler de l'air vers l'arrière de la nacelle 2.

Ces moyens de propulsion 11 sont constitués par au moins une hélice 12 disposée de préférence dans un carénage 13 de forme tubulaire. L'hélice 12 est entraînée par un moteur non représenté. sur le dessin.

Selon l'invention, au moins une partie de l'air soufflé par les moyens de propulsion 11 peut être déviée sans discontinuité, à partir de sa trajectoire normale, dirigée à l'horizontale, vers une trajectoire verticale dirigée au-dessus de la nacelle 2, à la demande du pilote, de manière à permettre, lors de la phase préparatoire avant décollage de l'engin 1, le gonflement et le déploiement de la voiture 4 ainsi que son positionnement au-dessus de la nacelle 2.

Lorsque la voilure 4 se trouve au-dessus de la nacelle 2 dans la position normale de sustentation, le souffle d'air est de nouveau dirigé vers l'arrière de la nacelle par action du pilote sur un organe de commande approprié, les freins de blocage des roues 6 sont ensuite lâchés, et la voilure 4 agit alors comme un parachute ascensionnel qui provoque le décollage de la nacelle 2 sur une très courte distance.

Selon un mode de réalisation préféré de l'invention, les moyens de propulsion 11 sont fixés sur un plan mobile 14 disposé à l'extérieur de la nacelle 2. Ce plan mobile 14 est lui-même solidaire d'un arbre horizontal pivotable 15 qui est monté transversalement sur la nacelle 2. Cet arbre 15 peut pivoter d'un quart de tour et il est commandé à partir du poste de pilotage 10 par des moyens de commande appropriés. De préférence l'arbre 15 traverse la nacelle 2 de part en part, et il est prévu un plan mobile 14 à chacune de ses extrémités. Les carénages 13 sont fixés aux plans mobiles 14. Les moyens de propulsion 11 comportent dans ce cas deux hélices de propulsion 12 qui sont entraînées soit par des moteurs individuels disposés à l'intérieur des carénages 13, soit par un moteur unique monté sur la nacelle 2 ou solidaire ce l'arbre 15 et pivotable avec celui-ci.

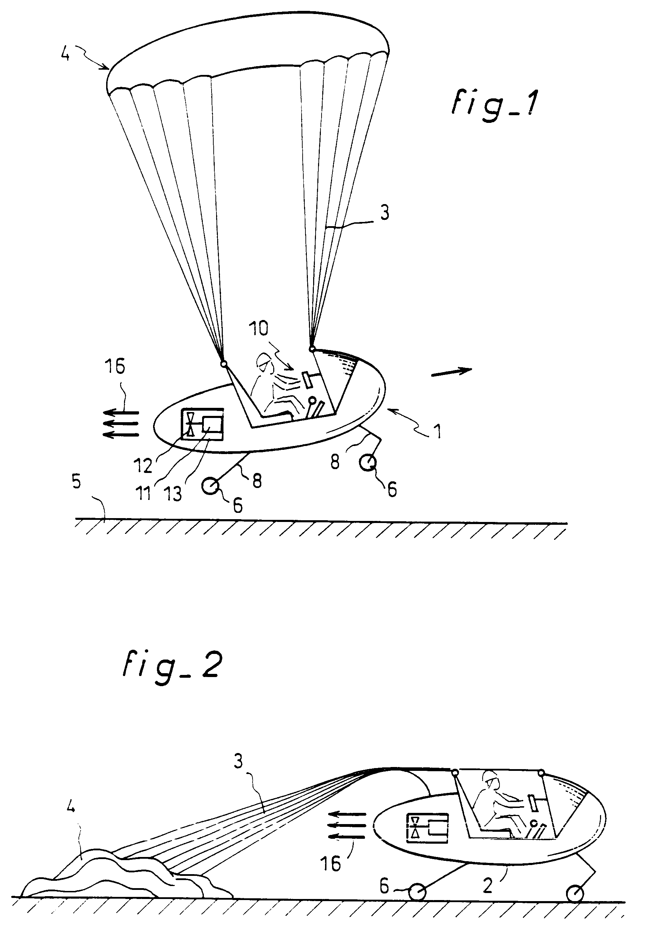

Les figures 2 à 4 montrent diverses vues de l'engin lors de la phase préparatoire au décollage.

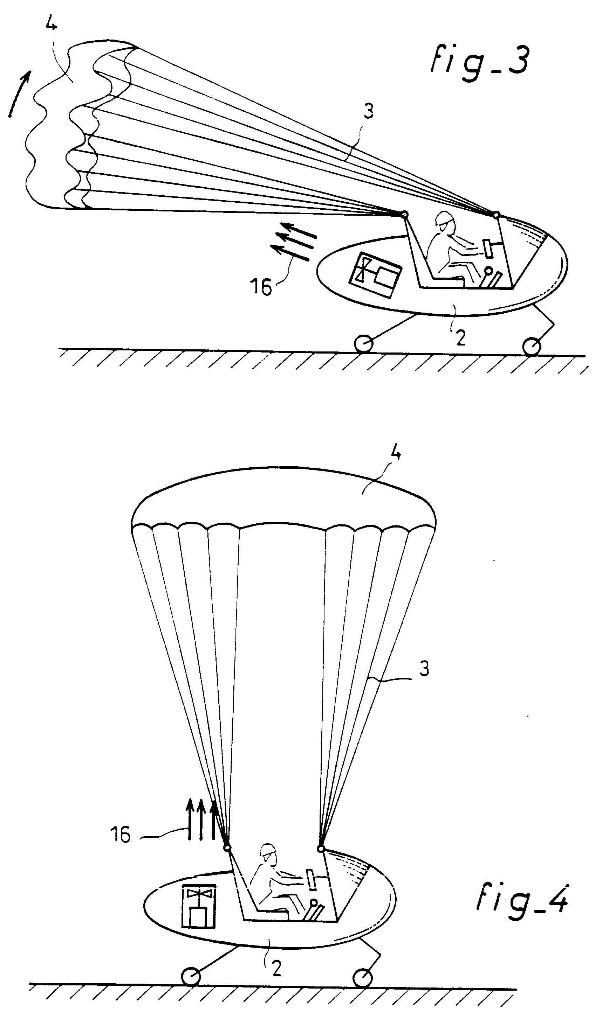

Sur la figure 2 on voit la nacelle 2 à l'arrêt sur le sol. La voilure 4 est disposée à l'arrière ce la nacelle 2 et les carénages 13 sont dirigés vers l'arrière. Lorsque l'on fait fonctionner les hélices 12, le souffle d'air 16 fait gonfler la voilure 4. Comme on le voit sur la figure 3, le pivotement ce l'arbre 15, entraîne le pivotement du souffle d'air 16 qui entraîne à son tour une remontée de la voilure 4 disposée au-dessus de la nacelle 2, le souffle d'air 16 étant alors dirigé vers le haut. Le pilote lâche alors les freins de blocage des roues 6, puis il fait pivoter l'arbre 14 afin que le souffle d'air 16 soit de nouveau dirigé vers l'arrière provoquant alors le déplacement de la nacelle 2 sur le sol 5. La voilure 4 agit alors comme un parachute ascensionnel et l'engin 1 quitte le sol 5.

Diverses modifications peuvent être apportées par l'homme de métier à l'engin volant 1 décrit ci-dessus. En particulier, les roues 6 peuvent être remplacées par des skis ou des flotteurs pour permettre le décollage ou l'atterrissage de l'engin à partir de champs de neige ou de plans d'eau.

Lorsque l'engin est équipé de plusieurs moteurs de propulsion, on peut prévoir que seuls quelques-uns d'entre eux soient orientables.

On comprend aisément que l'engin volant décrit ci-dessus permette la pratique ce l'aéronautisme sans danger, car en cas de panne des moteurs de propulsion, la voilure de sustentation fonctionne comme un parachute de type "aile".

Il est à noter que l'orientation du flux d'air dans la direction verticale de bas en haut sur la voilure permet un vol presque stationnaire.

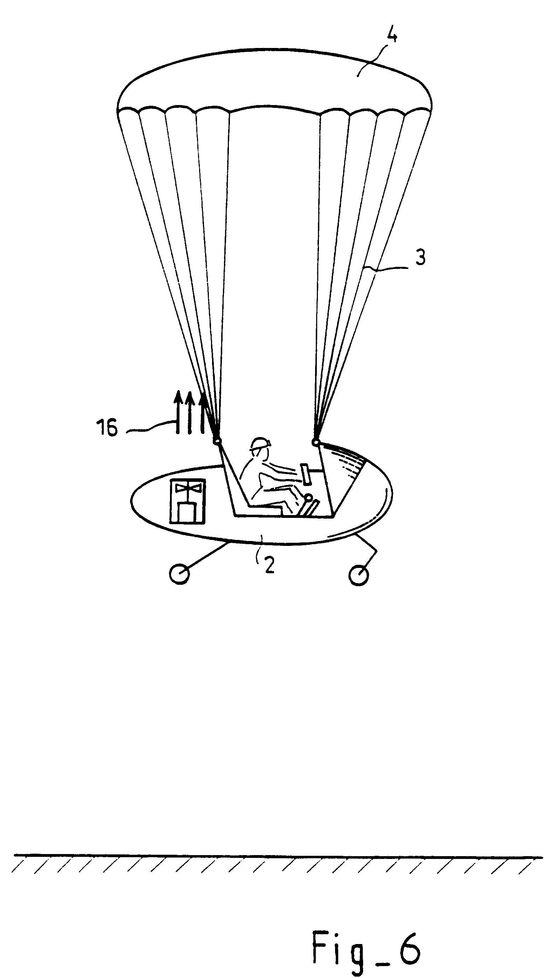

La figure 6 montre l'engin volant 1 dans une phase de vol presque stationnaire qui est assurée en altitude, en faisant tourner les moteurs d'entraînement au ralenti maximum et en dirigeant le léger souffle des hélices 12 vers la voilure 4. Cette phase ce vol nécessite bien entendu une fonction de pilotage appropriée.

Il est bien évident que ce positionnement de l'ensemble n'assure pas un vol stationnaire idéal, mais couplé avec un léger vent de face, il peut apporter une aide particulière inconnue à ce jour sur ces catégories d'appareils.

## Revendications

1. Engin volant du type ultra-léger motorisé, comportant une nacelle (2) avec poste de pilotage (10), une voilure de sustentation, des moyens de propulsion (11) destinés à souffler de l'air vers l'arrière dudit engin et des moyens de pilotage, ladite voilure de sustentation étant constituée d'un parachute de type "aile" (4), aux suspentes (3) duquel ladite nacelle (2) est accrochée,
caractérisé en ce qu'il comporte de plus, des moyens pour dévier, à la demande, au moins une partie de l'air soufflé par lesdits moyens de propulsion (11) de manière à permettre, dans la phase précédant le décollage dudit engin, le gonflement de ladite voilure (4), son déploiement et son positionnement au-dessus de ladite nacelle (2), lesdits moyens pour dévier au moins une partie de l'air soufflé par les moyens de propulsion étant portés par ladite nacelle (2).

2. Engin selon la revendication 1, dans lequel lesdits moyens de propulsion (11) de l'engin (1) comportent au moins une hélice de propulsion (12) actionnée par un moteur,
caractérisé en ce que lesdits moyens pour dévier au moins une partie de l'air soufflé par lesdits moyens de propulsion comportent un arbre horizontal pivotable (15) disposé transversalement sur ladite nacelle (2) et dont le pivotement est commandé, dudit poste de pilotage (10), par des moyens de commande, et l'une au moins des hélices (12) des moyens de propulsion (11) est portée par ledit arbre (15).

3. Engin selon la revendication 2, caractérisé en ce qu'une extrémité au moins dudit arbre (15) est munie d'un plan mobile (14) disposé à l'extérieur de la nacelle (2) et une hélice (12) est montée sur ledit plan mobile (14).

4. Engin selon l'une quelconque des revendications 2 et 3, caractérisé en ce que ledit arbre (15) peut pivoter par rapport à la nacelle (2) d'un quart de tour environ.

5. Engin selon l'une quelconque des revendications 2 à 4, caractérisé en ce que ledit arbre (15) est solidaire de deux plans mobiles (14) disposés de part et d'autre de la nacelle (2), et les moyens de propulsion (11) comportent au moins deux hélices (12) montées respectivement sur lesdits plans mobiles (14).

## Claims

1. Flying machine of the motorised ultralight type, comprising a nacelle (2) with pilot's cockpit (10), a lifting sail, propulsion means (11) designed to blow air towards the rear of said machine and piloting means, said lifting sail consisting of a parachute of the "wing" type (4), from the suspension lines (3) of which said nacelle (2) is hung, characterised in that it further comprises means for diverting, as desired, at least a portion of the air blown by said propulsion means (11) so as to allow, in the stage preceding take-off of said machine, inflation of said sail (4), development thereof and positioning thereof above said nacelle (2), said means for diverting at least a portion of the air blown by the propulsion means being carried by said nacelle (2).

2. Machine according to claim 1, in which said propulsion means (11) of the machine (1) comprise at least one propeller (12) driven by an engine, characterised in that said means for diverting at least a portion of the air blown by said propulsion means comprise a pivotable horizontal shaft (15) which is arranged transversely on said nacelle (2) and of which the pivoting is controlled, from said pilot's cockpit (10), by control means, and at least one of the propellers (12) of the propulsion means (11) is carried by said shaft (15).

3. Machine according to claim 2, characterised in that at least one end of said shaft (15) is provided with a movable surface (14) arranged outside the nacelle (2), and a propeller (12) is mounted on said movable surface (14).

4. Machine according to either of claims 2 and 3, characterised in that said shaft (15) can pivot relative to the nacelle (2) by about a quarter of a turn.

5. Machine according to any of claims 2 to 4, characterised in that said shaft (15) is rigidly connected to two movable surfaces (14) arranged on either side of the nacelle (2), and the propulsion means (11) comprise at least two propellers (12) mounted on said movable surfaces (14) respectively.

## Patentansprüche

1. Ultraleichtes motorisiertes Fluggerät, das eine Gondel (2) mit Pilotenkanzel (10), ein Tragwerk, einen Antrieb (11) zum Blasen von Luft relativ zum Fluggerät nach hinten und eine Steuereinrichtung aufweist, wobei das Tragwerk aus einem flügelförmigen Fallschirm (4) gebildet ist, mit Fangleinen (3), an denen die Gondel (2) angehängt ist,
dadurch **gekennzeichnet**, daß das Fluggerät weiterhin eine Einrichtung zum wahlweisen Umlenken zumindest eines Teils der vom Antrieb (11) geblasenen Luft aufweist, um es vor dem Abheben des Fluggeräts zu ermöglichen, das Tragwerk (4) aufzublähen, es zu entfalten und es über der Gondel (2) anzuordnen, wobei die Einrichtung zum Umlenken zumindest eines Teils der vom Antrieb geblasenen Luft von der Gondel (2) getragen wird.

2. Fluggerät nach Anspruch 1, bei dem der Antrieb (11) des Fluggeräts (1) mindestens eine Luftschraube (12) aufweist, die von einem Motor getrieben wird,
dadurch **gekennzeichnet**, daß die Einrichtung zum Umlenken zumindest eines Teils der vom Antrieb geblasenen Luft eine waagerechte drehbare Welle (15) aufweist, die quer an der Gondel (2) angeordnet ist und deren Drehung von der Pilotenkanzel (10) aus durch eine Betätigungseinrichtung bewirkt wird, und daß zumindest eine der Luftschrauben (12) des Antriebs (11) von der Welle (15) getragen wird.

3. Fluggerät nach Anspruch 2,
dadurch **gekennzeichnet**, daß zumindest ein Ende der Welle (15) eine außerhalb der Gondel (2) angeordnete verstellbare Fläche (14) aufweist und eine Luftschraube (12) an der verstellbaren Fläche (14) angebracht ist.

4. Fluggerät nach Anspruch 2 oder 3,
dadurch **gekennzeichnet**, daß die Welle (15) relativ zur Gondel (2) ungefähr um eine Vierteldrehung drehbar ist.

5. Fluggerät nach einem der Ansprüche 2 bis 4,
dadurch **gekennzeichnet**, daß die Welle (15) mit zwei verstellbaren Flächen (14), die auf je einer Seite der Gondel (2) angeordnet sind, fest verbunden ist und der Antrieb (11) mindestens zwei Luftschrauben (12) aufweist, die an je einer der verstellbaren Flächen (14) angebracht sind.
